# EUROPÄISCHE PATENTSCHRIFT

(11) **EP 2 284 428 B1**
(45) Veröffentlichungstag und Bekanntmachung des Hinweises auf die Patenterteilung: **04.07.2012**
(21) Anmeldenummer: 09305738.8
(22) Anmeldetag: 07.08.2009
(51) Int. Cl.: F16L 11/11

(54) **Leitungsrohr und Verfahren zu seiner Herstellung**
Conduit pipe and method for its production
Conduite et son procédé de fabrication

(43) Veröffentlichungstag der Anmeldung: 16.02.2011
(73) Patentinhaber: Nexans, 75008 Paris (FR)
(72) Erfinder: Frohne, Christian, Dr.-Ing., 30657 Hannover (DE); Schippl, Klaus, Dipl.-Ing., 30659 Hannover (DE)
(74) Vertreter: Döring, Roger

(56) Entgegenhaltungen:
- WO-A-2007/017103
- DE-A1- 1 400 523
- DE-B3- 10 355 475
- GB-A- 2 300 684

## Beschreibung

Die Erfindung bezieht sich auf ein Verfahren zur Herstellung eines als gewelltes Metallrohr ausgeführten Leitungsrohrs.

Ein mit einem solchen Verfahren herstellbares Leitungsrohr geht beispielsweise aus der DE 103 55 475 B3 hervor.

Derartige Leitungsrohre werden zum Transport von Flüssigkeiten und Gasen eingesetzt. Sie sind wegen des gewellten Metallrohrs gut biegbar und daher einfach zu verlegen. Um einen durch die Wellung des Metallrohrs bedingten Druckverlust des zu transportierenden Mediums sowie Strömungsgeräusche und Schwingungen des Metallrohrs zu vermeiden, die sich in der Umgebung desselben störend bemerkbar machen können, ist in dem Metallrohr ein glatter Schlauch als Kunststoff angebracht, der auch als "Liner" bezeichnet wird.

Bei dem Verfahren nach der DE 102 41 504 A1 wird ein druckfester Schlauch aus Kunststoff eingesetzt, der in ein vorgefertigtes, gewelltes Metallrohr eingezogen wird. Das Leitungsrohr wird dann bis zur Erweichungstemperatur des für den Schlauch verwendeten Kunststoffs erwärmt. Der Schlauch wird anschließend mit Druck beaufschlagt, so daß er sich an die Wellentäler des Metallrohrs anlegt und zumindest teilweise in dessen Wellung eindringt. Während des Betriebes des Leitungsrohres kann das zu transportierende, unter Druck stehende Medium durch die Wandung des Schlauchs nach außen diffundieren. Das führt nach und nach zu einem Druckaufbau im Raum zwischen Metallrohr und Schlauch, wodurch der Schlauch mechanisch stark belastet wird. Wenn der Schlauch ohne zu transportierendes Medium entlastet wird, fällt er daher aufgrund des erhöhten, von außen wirkenden Drucks in sich zusammen. Das Leitungsrohr muß dann aufwendig wieder instand gesetzt werden oder es ist gar nicht mehr brauchbar.

Aus der GB 2 300 684 A geht eine Leitung zum Transport eines unter Druck stehenden fließfähigen Mediums hervor, das ein aus Kunststoff bestehendes, quer zu seiner Längsrichtung gewelltes Rohr und einen in demselben angeordneten, ebenfalls aus Kunststoff bestehenden, glatten Schlauch aufweist, der in Gebrauchslage an den nach innen weisenden Wellentälern des Rohres anliegt. In der Wandung des Schlauchs ist auf seiner ganzen axialen Länge eine Vielzahl von voneinander getrennten Löchern angebracht.

Die WO 2007/017103 A1 beschreibt eine Kältemittelleitung, welche aus einem quer zu seiner Längsrichtung gewellten Metallschlauch und einem innerhalb desselben angeordneten Innenliner besteht. Der Innenliner wird nach seiner Einbringung in den Metallschlauch erwärmt und mit innenseitigem Druck beaufschlagt, so daß er sich zumindest im Bereich der nach innen weisenden Wellentäler des Metallschlauchs an denselben anlegt. Die Wellentäler des Metallschlauchs dringen dadurch geringfügig in die Oberfläche des Innenliners ein. Die WO 2007/017103 A1 offenbart damit ein Verfahren zur Herstellung eines quer zu seiner Längsrichtung gewellten Metallrohres mit einem innerhalb dessen liegenden Schlauch aus Kunststoff, bei dem die Wellentäler des gewellten Metallrohres geringfügig in die Oberfläche des Schlauches eindringen.

Das bekannte Leitungsrohr zur Führung von Fluiden nach der eingangs erwähnten DE 103 55 475 B3 besteht aus einem quer zu seiner Längsrichtung gewellten Mantelschlauch, in dem ein perforierter Innenschlauch angeordnet ist. Der Innenschlauch ist an den Enden des Leitungsrohrs mittels eines Kaltfingers bzw. eines Adapters mechanisch mit dem Mantelschlauch verbunden.

Der Erfindung liegt die Aufgabe zugrunde, das eingangs geschilderte Verfahren einfacher zu gestalten.

Diese Aufgabe wird entsprechend der Gesamtheit der Merkmale des einzigen Patentanspruchs gelöst.

Der Schlauch ist bei Einsatz dieses Verfahrens für das Leitungsrohr funktionsmäßig nur eine glattwandige Auskleidung des gewellten Metallrohrs. Da er nicht druckfest ist und auch nicht sein soll, ist das für den Schlauch verwendete Material weitestgehend beliebig. Er kann den Erfordernissen des zu transportierenden Mediums leicht angepaßt werden. Die Löcher in der Wandung des Schlauchs stellen sicher, daß an jeder Stelle des Leitungsrohrs während des Transports eines unter Druck stehenden Mediums ein Druckausgleich zwischen dem den Schlauch umgebenden und dem vom Schlauch umschlossenen Raum erfolgt. Damit ist ein Zusammenfallen des Schlauchs aufgrund eines unkontrollierten Druckaufbaus in dem den Schlauch umgebenden Raum vermieden. Das Leitungsrohr ist dabei insgesamt druckfest und alle vom Metallrohr umschlossenen Räume weisen zu jeder Zeit definierte Druckverhältnisse auf. Dadurch, daß das Metallrohr geringfügig in die Oberfläche des Schlauchs hineinragt, ist derselbe außerdem auf einfache Weise gegenüber axialen Belastungen im Wellrohr fixiert. Das Verfahren zur Herstellung des Leitungsrohrs garantiert eine kontinuierliche Fertigung desselben in beliebiger Länge.

Das Verfahren nach der Erfindung wird anhand der Zeichnungen als Ausführungsbeispiel erläutert.

Es zeigen:
Fig. 1 eine Seitenansicht eines Leitungsrohrs nach der Erfindung teilweise im Schnitt.
Fig. 2 in schematischer Darstellung eine Vorrichtung zur Herstellung eines Leitungsrohrs nach Fig. 1.

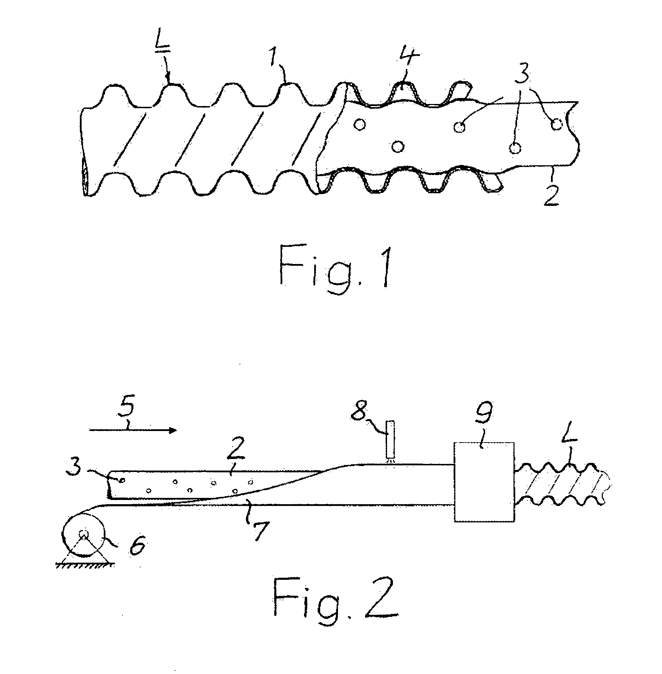

Ein Leitungsrohr L gemäß Fig. 1 besteht aus einem quer zu seiner Längsrichtung gewellten Metallrohr 1 und einem in demselben angeordneten Schlauch 2 aus Kunststoff. Als Material für das Metallrohr 1 ist mit Vorteil Stahl eingesetzt. Der vorzugsweise aus einem polymeren Material bestehende Schlauch 2 ist so bemessen, daß das Metallrohr 1 mit seinen nach innen weisenden Wellentälern geringfügig in die Oberfläche desselben hineinragt bzw. eindringt, so wie es aus Fig. 1 hervorgeht. Der Schlauch 2 ist dadurch gegenüber axialen Belastungen im Metallrohr 1 fixiert.

Der Schlauch 2 hat auf seiner ganzen axialen Länge eine Vielzahl von Löchern 3, die seine Wandung durchbrechen. Der Raum 4 zwischen Metallrohr 1 und Schlauch 2 ist über die Löcher 3 mit dem vom Schlauch 2 umschlossenen Raum verbunden. Die Löcher 3 sind voneinander getrennt und über den Umfang des Schlauchs 2 verteilt angeordnet. Sie haben mit Vorteil eine zwischen 1 mm und 10 mm liegende lichte Weite. Ihr Abstand voneinander beträgt beispielsweise 1 cm bis 10 cm.

Das Leitungsrohr L wird beispielsweise wie folgt hergestellt:
Ein Schlauch 2 wird von einer nicht mit dargestellten Abzugsvorrichtung in Richtung des Pfeiles 5 von einem Vorrat abgezogen. Um den Schlauch 2 herum wird von einer Spule 6 mittels der gleichen Abzugsvorrichtung, wie sie für den Schlauch 2 verwendet wird, ein Metallband 7 abgezogen und längseinlaufend zu einem Schlitzrohr geformt. Das Schlitzrohr hat einen in Längsrichtung offenen Schlitz, an dem die beiden Längskanten des Metallbandes 7 aneinander stoßen. Der Schlitz wird danach im gleichen Arbeitsgang in einer Schweißeinrichtung 8 verschweißt, so daß ein rundum geschlossenes Rohr vorliegt. Dieses Rohr wird anschließend, ebenfalls im gleichen Arbeitsgang, in einer Welleinrichtung 9 quer zu seiner Längsrichtung gewellt. Hinter der Welleinrichtung 9 liegt das fertige Leitungsrohr L vor, das als gut biegbares Gebilde in großer Länge auf eine Spule aufgewickelt werden kann.

Die Tiefe der Wellung des Metallrohres 1 wird in der Welleinrichtung 9 so eingestellt, daß dasselbe gemäß Fig. 1 mit seinen nach innen weisenden Wellentälern geringfügig in den Schlauch 2 bzw. dessen Oberfläche eindringen, wodurch der Schlauch 2 gegenüber axialen Belastungen innerhalb des Metallrohres 1 fixiert ist.

Die Wellung des Metallrohres 1 kann wendelförmig oder ringförmig ausgeführt sein. Bei der wendelförmigen Wellung liegt ein wendelförmig verlaufender, durchgehender Raum 4 vor, so daß die Anzahl der Löcher 3 im Schlauch 2 kleiner als bei einer ringförmigen Wellung sein kann, bei welcher der Raum 4 aus einer Vielzahl von ringförmig verlaufenden Teilräumen besteht.

## Patentansprüche

1. Verfahren zur Herstellung eines quer zu seiner Längsrichtung gewellten Metallrohres (1) mit einem innerhalb dessen liegenden Schlauch (2) aus Kunststoff, mit welchem in kontinuierlicher Arbeitsweise um den in seiner Längsrichtung bewegten Schlauch (2), der auf seiner ganzen axialen Länge seine Wandung durchbrechende, voneinander getrennte Löcher (3) aufweist, ein aus einem in Längsrichtung bewegten Metallband (7) geformtes Schlitzrohr mit einem in Längsrichtung verlaufenden Schlitz herum geformt wird, mit welchem der Schlitz anschließend zur Erzeugung eines rundum geschlossenen Rohres verschweißt wird und mit welchem das Rohr danach derart mit einer quer zu seiner Längsrichtung verlaufenden Wellung versehen wird, daß die Wellentäler des **dadurch** erhaltenen, gewellten Metallrohres (1) geringfügig in die Oberfläche des Schlauchs (2) eindringen.

## Claims

1. Method for the production of a metallic tube (1) which is corrugated transversely to its longitudinal direction and within which a hose (2) of plastic is provided, by which in a continuous operation, a slotted tube is formed from a metal strip (7), which is moved in its longitudinal direction, the tube having a slot running in the longitudinal direction is formed around the hose (2) which is moved in its longitudinal direction and which has overits entire axial length holes (3) piercing its wall and separated from one another, by which the slot then is welded to achieve a completely closed tube and by which the tube there after is provided with a corrugation running transversely to its longitudinal direction, in such way that the wave troughs of the corrugated metal tube (1) thereby obtained penetrate slightly into the surface of the hose (2).

## Revendications

1. Procédé de fabrication d'un tube métallique (1) ondulé transversalement à sa direction longitudinale, comprenant un tuyau (2) en plastique situé à l'intérieur de celui-ci, avec lequel procédé, dans une procédure de travail continue, un tube fendu formé d'une bande métallique déplacée dans la direction longitudinale (7) est façonné avec une fente s'étendant dans la direction longitudinale tout autour du tuyau (2) déplacé dans sa direction longitudinale, qui présente sur toute sa longueur axiale des trous (3) séparés les uns des autres, traversant sa paroi, avec lequel procédé la fente est ensuite soudée pour produire un tube fermé tout autour et avec lequel procédé le tube est ensuite pourvu d'une ondulation s'étendant transversalement à sa direction longitudinale, de telle sorte que les creux des ondulations du tube métallique ondulé (1) ainsi obtenu pénètrent légèrement dans la surface du tuyau (2).
